# EUROPÄISCHE PATENTANMELDUNG

(11) **EP 4 398 474 A1**
(43) Veröffentlichungstag der Anmeldung: **10.07.2024**
(21) Anmeldenummer: 23150748.4
(22) Anmeldetag: 09.01.2023
(51) Int. Cl.: H02M 5/297, H05B 7/144, H02M 1/00, H02M 1/12

(54) **ELEKTRISCHE ANORDNUNG**

(71) Anmelder: Primetals Technologies Germany GmbH, 91058 Erlangen (DE)
(72) Erfinder: Alishov, Ramazan, 91058 Erlangen (DE); Matschullat, Thomas, 90542 Eckental (DE); Winter, Günther, 91077 Neunkirchen/Brand (DE)
(74) Vertreter: Metals@Linz

(57) **Zusammenfassung**

Eine elektrische Anordnung weist ein eingangsseitiges Drehstromnetz (1) mit mehreren eingangsseitigen Phasen (1a, 1b, 1c), ein ausgangsseitiges Drehstromnetz (2) mit mehreren ausgangsseitigen Phasen (2a, 2b, 2c) und einen elektrischen Ofen (3) mit mehreren Elektroden (4a, 4b, 4c) und einem Ofengefäß (5) auf. Die Elektroden (4a, 4b, 4c) sind mit den ausgangsseitigen Phasen (2a, 2b, 2c) verbunden, so dass über von den Elektroden (4a, 4b, 4c) ausgehende Lichtbögen thermische Energie in in dem Ofengefäß (5) befindliches Metall bzw. in eine in dem Ofengefäß (5) befindliche Metallschmelze (6) eingebracht wird. Die ausgangsseitigen Phasen (2a, 2b, 2c) sind über jeweilige Umrichtereinheiten (7) jeweils mit mehreren der eingangsseitigen Phasen (1a, 1b, 1c) verbunden. Die Umrichtereinheiten (7) weisen ausschließlich Schaltelemente (12, 17, 20) mit oder ohne den Schaltelementen (12, 17, 20) parallel geschaltete stromrichtende Elemente (13, 14) auf, aber weder intern noch parallel geschaltet elektrische Speicherelemente. Somit können die Umrichtereinheiten (7) zwar die jeweilige ausgangsseitige Phase (2a, 2b, 2c) mit der jeweiligen eingangsseitigen Phase (1a, 1b, 1c) stromleitend verbinden und die jeweilige ausgangsseitige Phase (2a, 2b, 2c) von der jeweiligen eingangsseitigen Phase (1a, 1b, 1c) trennen. Sie können aber weder intern noch durch parallel geschaltete elektrische Speicherelemente Energie speichern. Innerhalb der jeweiligen Umrichtereinheit (7) auftretende Spannungsverluste sind vielmehr ausschließlich durch die an den Schaltelementen (12, 17, 20) auftretenden Spannungsabfälle hervorgerufen.

## Beschreibung

### Bezeichnung der Erfindung

### Gebiet der Technik

Die vorliegende Erfindung geht aus von einer elektrischen Anordnung,
- wobei die elektrische Anordnung ein eingangsseitiges Drehstromnetz mit mehreren eingangsseitigen Phasen aufweist,
- wobei die elektrische Anordnung ein ausgangsseitiges Drehstromnetz mit mehreren ausgangsseitigen Phasen aufweist,
- wobei die elektrische Anordnung einen elektrischen Ofen mit mehreren Elektroden und einem Ofengefäß aufweist,
- wobei die Elektroden mit den ausgangsseitigen Phasen verbunden sind, so dass über von den Elektroden ausgehende Lichtbögen thermische Energie in in dem Ofengefäß befindliches Metall bzw. in eine in dem Ofengefäß befindliche Metallschmelze eingebracht wird,
- wobei die ausgangsseitigen Phasen über jeweilige Umrichtereinheiten jeweils mit mehreren der eingangsseitigen Phasen verbunden sind.

Die vorliegende Erfindung betrifft weiterhin ein Betriebsverfahren für eine derartige elektrische Anordnung.

### Stand der Technik

Eine derartige elektrische Anordnung ist beispielsweise aus der WO 2015/176 899 A1 bekannt. Bei dieser elektrischen Anordnung weisen die Umrichtereinheiten jeweils eine Sequenz von in Serie geschalteten Submodulen auf, wobei die einzelnen Submodule jeweils eine Transistor-Vollbrücke mit einem innerhalb der jeweiligen Transistor-Vollbrücke angeordneten Speicherkondensator aufweisen.

Eine derartige elektrische Anordnung ist weiterhin beispielsweise aus der EP 3 124 903 A1 bekannt. Bei dieser elektrischen Anordnung ist die jeweilige Umrichtereinheit als Zwischenkreisumrichter mit einem eingangsseitigen Gleichrichter, einem ausgangsseitigen Wechselrichter und einem zwischen dem Gleichrichter und dem Wechselrichter angeordneten Zwischenkreiskondensator ausgebildet.

Eine ähnliche elektrische Anordnung ist beispielsweise aus der WO 2020/259 900 A1 bekannt. Bei dieser elektrischen Anordnung sind die ausgangsseitigen Phasen über die Umrichtereinheiten nicht mit mehreren eingangsseitigen Phasen verbunden, sondern nur 1:1 mit jeweils einer der eingangsseitigen Phasen verbunden. Die Umrichtereinheiten können vor oder hinter einem Ofentransformator angeordnet sein. Sie weisen jeweils eine Sequenz von in Serie geschalteten Konverterzellen auf, wobei die einzelnen Konverterzellen jeweils eine Thyristor-Vollbrücke mit einem innerhalb der jeweiligen Vollbrücke angeordneten Speicherkondensator aufweisen. Den Konverterzellen kann ein mechanischer Schalter oder eine Parallelschaltung zweier Thyristoren parallel geschaltet sein, so dass die jeweilige Konverterzelle überbrückt werden kann. Das Überbrücken der Konverterzellen erfolgt nur im Anlauf, d.h. bis der Ofentransformator energetisiert ist.

Ähnliche Ausgestaltungen sind beispielsweise dem Fachaufsatz " New System for Highly Efficient Power Input to Arc Furnaces Causing Minimum Network Disturbances", von Solal Bhatt et al., veröffentlicht in IRON & STEEL TECHNOLOGY, Januar 2022, Seiten 84 bis 91 zu entnehmen.

### Zusammenfassung der Erfindung

Beim Schmelzen von Stahl in einem Elektrolichtbogenofen erfolgt die Energiezufuhr üblicherweise über Graphitelektroden. Die einzelnen Spannungsstufen sind durch die Auslegung eines Ofentransformators vorgegeben. Die Spannung bleibt, solange die jeweilige Spannungsstufe nicht gewechselt wird, konstant. Der Strom unterliegt bei Vorgabe einer konstanten Wirkleistung auch innerhalb der jeweiligen Spannungsstufe deutlichen Schwankungen. Diese Schwankungen führen oftmals zu einer starken Belastung der mechanischen Bauteile, beispielsweise der Hochstromkabel, der stromführenden Tragarme oder von Hydraulikzylindern, mittels derer die mechanische Positionierung der Elektroden vorgenommen wird. Weiterhin ist die mechanische Positionierung der Elektroden, die mittels der Hydraulikzylinder vorgenommen wird, erheblich langsamer als das reale Verhalten des Lichtbogens. Dies gilt bereits in der Flachbadphase, aber in noch stärkerem Umfang in der Bohr- und Schmelzphase eines Lichtbogenofens.

Die obenstehend angeführten Lösungen bieten bereits Möglichkeiten, den Strom selbst zu regeln. Die mechanische Nachführung der Elektroden kann deutlich reduziert werden. Sie sind jedoch sowohl technisch als auch wirtschaftlich aufwendig.

Die Aufgabe der vorliegenden Erfindung besteht darin, eine elektrische Anordnung der eingangs genannten Art kostengünstig, einfach und robust auszugestalten. Die elektrische Anordnung soll insbesondere sowohl bei einem kleineren elektrischen Ofen als auch bei einem grö-ßeren elektrischen Ofen wirtschaftlich realisierbar sein. Die Grenze zwischen einem kleineren und einem größeren elektrischen Ofen liegt in der Regel bei rund 150 MVA.

Die Aufgabe wird durch eine elektrische Anordnung mit den Merkmalen des Anspruchs 1 gelöst. Vorteilhafte Ausgestaltungen der elektrischen Anordnung sind Gegenstand der abhängigen Ansprüche 2 bis 14.

Erfindungsgemäß wird eine elektrische Anordnung der eingangs genannten Art dadurch ausgestaltet, dass die Umrichtereinheiten ausschließlich Schaltelemente mit oder ohne den Schaltelementen parallel geschaltete stromrichtende Elemente, aber weder intern noch parallel geschaltet elektrische Speicherelemente aufweisen, so dass die Umrichtereinheiten zwar die jeweilige ausgangsseitige Phase mit der jeweiligen eingangsseitigen Phase stromleitend verbinden und die jeweilige ausgangsseitige Phase von der jeweiligen eingangsseitigen Phase trennen können, aber weder intern noch durch parallel geschaltete elektrische Speicherelemente Energie speichern können und innerhalb der jeweiligen Umrichtereinheit auftretende Spannungsverluste ausschließlich durch die an den Schaltelementen auftretenden Spannungsabfälle hervorgerufen sind.

Es erfolgt also eine Direktumrichtung von dem eingangsseitigen Drehstromnetz auf das ausgangsseitige Drehstromnetz. Dadurch vereinfacht sich zum einen die Ansteuerung der Umrichtereinheiten. Weiterhin ist diese Lösung kostengünstig realisierbar, da die Anzahl an Schaltelementen reduziert ist und keine elektrischen Speicherelemente benötigt werden.

In einer möglichen Ausgestaltung weisen die Umrichtereinheiten als Schaltelemente jeweils zwei in Serie geschaltete Gruppen von in Serie geschalteten Halbleiterschaltern auf und ist den Gruppen als stromrichtende Elemente jeweils eine Gruppe von Dioden parallel geschaltet. Bei dieser Ausgestaltung sind die beiden Gruppen von Dioden invers zueinander gepolt. Diese Ausgestaltung bietet eine große Flexibilität bezüglich der Art an möglichen Halbleiterschaltern. Insbesondere können die Halbleiterschalter als Transistoren oder als Thyristoren ausgebildet sein, im Falle von Transistoren insbesondere als MOSFETs oder IGBTs und im Falle von Thyristoren insbesondere als GTOs oder netzgeführte Thyristoren.

In einer alternativen möglichen Ausgestaltung weisen die Umrichtereinheiten als Schaltelemente jeweils zwei einander parallel geschaltete Gruppen von in Serie geschalteten Thyristoren auf, die invers zueinander gepolt sind. Gleichwertig hierzu ist es, wenn die Umrichtereinheiten als Schaltelemente eine Gruppe von in Serie geschalteten Thyristorblöcken aufweisen, wobei die Thyristorblöcke jeweils zwei einander parallel geschaltete Thyristoren aufweisen, die invers zueinander gepolt sind. Diese beiden Ausgestaltungen sind besonders kostengünstig, weil die Dioden entfallen können. Die Thyristoren können nach Bedarf GTOs oder netzgeführte Thyristoren sein.

Bei beiden Ausgestaltungen kann die Anzahl an Halbleiterschaltern und Dioden pro jeweiliger Gruppe nach Bedarf sein. In seltenen Einzelfällen wird es genügen, wenn die Gruppen entartet sind, also nur jeweils einen einzigen Halbleiterschalter bzw. eine einzige Diode aufweisen. In der Regel werden die Gruppen jedoch jeweils mehrere Halbleiterschalter bzw. Dioden aufweisen.

Vorzugsweise ist zwischen den Umrichtereinheiten und den eingangsseitigen Phasen jeweils eine eingangsseitige Induktivität angeordnet. Alternativ oder zusätzlich kann zwischen den Umrichtereinheiten und den ausgangsseitigen Phasen jeweils eine ausgangsseitige Induktivität angeordnet sein. Mittels der Induktivitäten können Rückwirkungen von Strom- und Spannungsspitzen und anderen Ungleichmäßigkeiten beim Betrieb der Elektroden des elektrischen Ofens auf das eingangsseitige Drehstromnetz reduziert werden.

Es ist möglich, dass jede Umrichtereinheit über eine eigene eingangsseitige bzw. ausgangsseitige Induktivität mit der jeweiligen eingangsseitigen bzw. ausgangsseitigen Phase verbunden ist. Die Anzahl an benötigten Induktivitäten und damit die Kosten können jedoch dadurch reduziert werden, dass die eingangsseitigen Induktivitäten und/oder die ausgangsseitigen Induktivitäten phasenweise zusammengefasst sind. Wenn beispielsweise das eingangsseitige und das ausgangsseitige Drehstromnetz jeweils dreiphasig ausgebildet sind, sind üblicherweise neun Umrichtereinheiten vorhanden. Werden jeweils eigene eingangsseitige Induktivitäten verwendet, sind eingangsseitig insgesamt neun Induktivitäten erforderlich. Die Anzahl an eingangsseitigen Induktivitäten kann jedoch durch entsprechende Zusammenfassung auf jeweils eine eingangsseitige Induktivität pro Phase und damit auf drei reduziert werden. Die gleiche Vorgehensweise kann auch ausgangsseitig zu einer Reduzierung von neun auf drei ausgangsseitige Induktivitäten führen.

In vielen Fällen werden die Elektroden direkt und 1:1 mit den ausgangsseitigen Phasen verbunden sein. Alternativ ist es möglich, dass die Elektroden mit den ausgangsseitigen Phasen über einen Umrichterblock verbunden sind. Diese Ausgestaltung führt zu einer größeren Flexibilität beim Betrieb der Umrichtereinheiten und des ausgangsseitigen Drehstromnetzes. Insbesondere kann die Spannung des ausgangsseitigen Drehstromnetzes konstant gehalten werden und kann dennoch die Spannung für die Elektroden des elektrischen Ofens nach Bedarf variiert werden. Weiterhin können dadurch Rückwirkungen auf das eingangsseitige Drehstromnetz reduziert werden.

Der Umrichterblock stellt einen weiteren AC-AC-Wandler dar. Der Umrichterblock arbeitet mit elektronischen Schaltelementen. Es handelt sich also insbesondere nicht um einen einfachen Transformator. Der Umrichterblock kann beispielsweise als Zwischenkreisumrichter ausgebildet sein. Alternativ kann der Umrichterblock pro ausgangsseitige Phase beispielsweise jeweils eine weitere Umrichtereinheit ähnlich den Umrichtereinheiten zwischen den eingangsseitigen und den ausgangsseitigen Phasen aufweisen, so dass eine 1:1-Zuordnung der ausgangsseitigen Phasen zu einer der Elektroden über eine der weiteren Umrichtereinheiten des Umrichterblocks realisiert wird.

Im Falle des Umrichterblocks ist es weiterhin möglich, dass die elektrische Anordnung weitere Lasten aufweist, die an das ausgangsseitige Drehstromnetz angeschlossen sind. Dadurch kann das ausgangsseitige Drehstromnetz flexibel genutzt werden.

Bei der erfindungsgemäßen elektrischen Anordnung ist es möglich, dass zwischen dem eingangsseitigen Drehstromnetz und den Elektroden des elektrischen Ofens kein Ofentransformator angeordnet ist. Dadurch verbessert sich die Kostenbilanz einer erfindungsgemäßen elektrischen Anordnung gegenüber einer konventionellen elektrischen Anordnung. Eine erforderliche Spannungsanpassung kann durch die Umrichtereinheiten erfolgen, gegebenenfalls im Zusammenwirken mit dem Umrichterblock.

In aller Regel weist die elektrische Anordnung einen Abspanntransformator auf, über den das eingangsseitige Drehstromnetz mit elektrischer Energie versorgt wird.

Ein Abspanntransformator unterscheidet sich deutlich von einem Ofentransformator.

Ein Abspanntransformator ist ein Serienprodukt. Im Gegensatz dazu ist ein Ofentransformator in aller Regel ein Unikat.

Ein Abspanntransformator weist im Rahmen der vorliegenden Ausgestaltung meist eine Eingangsspannung von 110 kV und als Ausgangsspannung eine Mittelspannung im Bereich von 10 kV bis 40 kV auf. Ein Ofentransformator hingegen weist als Eingangsspannung eine Mittelspannung im Bereich von 10 kV bis 40 kV und als Ausgangsspannung eine Niederspannung im Bereich zwischen 300 V und 3,3 kV auf, insbesondere eine Spannung von ca. 1 kV.

Ein Ofentransformator muss für mehrere Sekunden kurzschlussfest sein. Dies gilt sowohl für die mechanische als auch für die elektrische Auslegung. Bei einem Abspanntransformator hingegen ist eine Kurzschlussfestigkeit in aller Regel nicht erforderlich. Auch kann ein Abspanntransformator die Phasen einzeln oder parallel transformieren, mit zwei, drei oder auch vier ausgangsseitigen Wicklungen versehen sein usw. Der Abspanntransformator kann auch als so genannter Zickzacktransformator ausgebildet sein oder die ausgangsseitigen Spannungen phasenversetzt ausgeben.

Ein Abspanntransformator weist üblicherweise an der Oberseite jeweils drei Durchführungen für die Phasen des eingehenden und des ausgehenden Drehspannungsnetzes auf (also eine Durchführung pro Phase). Ein Ofentransformator weist üblicherweise zwar an der Oberseite ebenfalls drei Durchführungen für die Phasen des eingehenden Drehspannungsnetzes auf. Die Anschlüsse für die Ausgangsseite sind bei einem Ofentransformator jedoch seitlich angeordnet. Weiterhin sind bei einem Ofentransformator pro ausgangsseitiger Phase mehrere Anschlüsse vorhanden, üblicherweise ca. 10 Anschlüsse. Diese Anschlüsse sind als Rohre ausgebildet, die innen mit Wasser gekühlt werden.

Ein Ofentransformator ist in einer Halle in unmittelbarer Nähe des Ofens angeordnet. Ein Abspanntransformator ist hingegen meist im Freien angeordnet, vor allem aber nicht in unmittelbarer Nähe des elektrischen Ofens.

Ein Abspanntransformator weist meist eine Öl-Luft-Kühlung auf, d.h. der Abspanntransformator selbst wird mit Öl gekühlt, wobei das Öl (mit oder ohne forcierte Luftbewegung) über Kühlrippen mit Luft gekühlt wird. Ein Ofentransformator weist hingegen meist eine Öl-Wasser-Kühlung auf, d.h. der Ofentransformator selbst wird mit Öl gekühlt, wobei das Öl jedoch über einen Wärmetauscher mit Wasser gekühlt wird.

Vorzugsweise weist die elektrische Anordnung weitere Lasten auf, die an das eingangsseitige Drehstromnetz angeschlossen sind. Dadurch kann das eingangsseitige Drehstromnetz allgemein verwendet werden und muss nicht speziell für den elektrischen Ofen vorgesehen werden.

Üblicherweise führt das eingangsseitige Drehstromnetz eine Mittelspannung im Bereich zwischen 10 kV und 40 kV. Typische Werte sind 11 kV, 15 kV, 30 kV und 33 kV sowie 35 kV. Die Mittelspannung ist erheblich größer als die Ofenspannung, welche an die Elektroden angelegt wird. Denn diese Spannung bewegt sich im Bereich von mehreren 100 V, manchmal auch im Bereich von etwas über 1 kV. Keinesfalls aber liegt sie bei mehr als 2 kV. Mittels der Umrichtereinheiten wird daher eine Umsetzung der Mittelspannung des eingangsseitigen Drehstromnetzes auf eine geringere (meist deutlich geringere) Spannung des ausgangsseitigen Drehstromnetzes vorgenommen. Insbesondere führt das ausgangsseitige Drehstromnetz üblicherweise eine Spannung im Bereich zwischen 300 V und 2 kV. Die Spannung des ausgangsseitigen Drehstromnetzes kann alternativ variabel oder konstant sein. Eine konstante Spannung ist insbesondere dann realisierbar, wenn die Elektroden mit den ausgangsseitigen Phasen über den Umrichterblock verbunden sind, so dass die finale Einstellung der Ofenspannung mittels des Umrichterblocks erfolgen kann.

Der elektrische Ofen kann nach Bedarf ein Lichtbogenofen oder ein Pfannenofen sein. In einem Lichtbogenofen wird festes Metall geschmolzen, also die Metallschmelze erzeugt. In einem Pfannenofen hingegen wird bereits geschmolzenes Metall, also eine bereits existierende bzw. erzeugte Metallschmelze, weiter behandelt. Im Pfannenofen erfolgt das sogenannte Refining.

Eine weitere Aufgabe der vorliegenden Erfindung besteht darin, eine erfindungsgemäße elektrische Anordnung effizient zu betreiben. Diese Aufgabe wird durch ein Betriebsverfahren mit den Merkmalen des Anspruchs 15 gelöst.

Erfindungsgemäß wird eine elektrische Anordnung derart betrieben, dass zum Regeln einer elektrischen Größe der von den Elektroden ausgehenden Lichtbögen die Umrichtereinheiten derart angesteuert werden, dass sie alternierend die jeweilige ausgangsseitige Phase mit der jeweiligen eingangsseitigen Phase stromleitend verbinden und die jeweilige ausgangsseitige Phase von der jeweiligen eingangsseitigen Phase trennen.

Die elektrische Größe kann nach Bedarf die an die Elektroden angelegte Spannung, der den Elektroden zugeführte Strom oder eine daraus abgeleitete Größe sein, beispielsweise die Wirkleistung, die Blindleistung oder die Scheinleistung. Der Betrieb erfolgt nicht nur beim Anlaufen des elektrischen Ofens, sondern auch und vor allem im laufenden Betrieb, wenn also die thermische Energie in das Metall bzw. die Metallschmelze eingebracht wird. Bei einem Lichtbogenofen sind diese Betriebsphasen die Bohrphase, die Schmelzphase und die Flachbadphase, bei einem Pfannenofen insbesondere die Refining-Phase.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine elektrische Anordnung,
- FIG 2: einen möglichen Aufbau einer Umrichtereinheit,
- FIG 3: eine Abwandlung der Umrichtereinheit von FIG 2,
- FIG 4: einen alternativen Aufbau einer Umrichtereinheit,
- FIG 5: einen weiteren alternativen Aufbau einer Umrichtereinheit,
- FIG 6: eine Abwandlung der elektrischen Anordnung von FIG 1 und
- FIG 7: eine mögliche Ausgestaltung eines Umrichterblocks.

### Beschreibung der Ausführungsformen

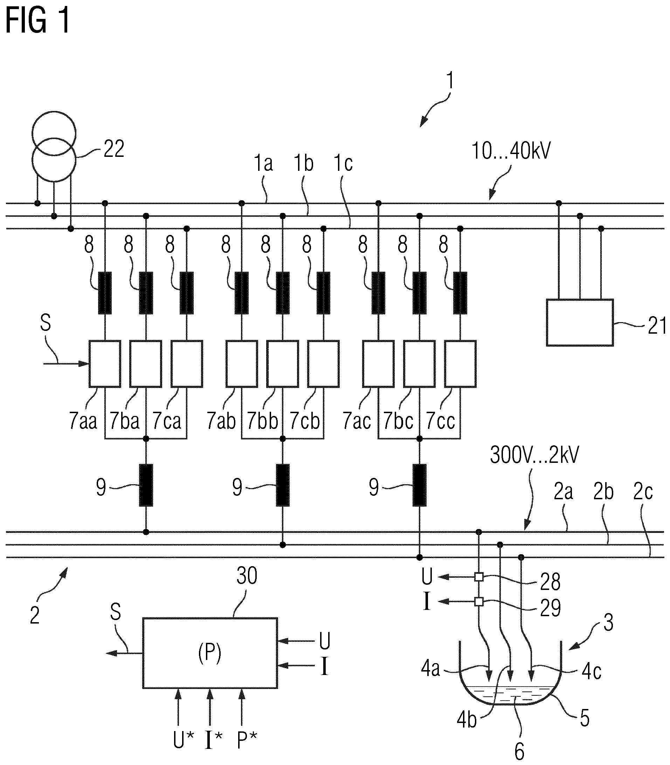

Gemäß FIG 1 weist eine elektrische Anordnung ein eingangsseitiges Drehstromnetz 1 auf. Das eingangsseitige Drehstromnetz 1 weist mehrere eingangsseitige Phasen 1a, 1b, 1c auf. Die Anzahl an eingangsseitigen Phasen 1a, 1b, 1c liegt üblicherweise bei drei. In Verbindung mit drei eingangsseitigen Phasen 1a, 1b, 1c wird die vorliegende Erfindung auch erläutert. Die Anzahl an eingangsseitigen Phasen 1a, 1b, 1c könnte jedoch auch größer als drei sein. Das eingangsseitige Drehstromnetz 1 führt in der Regel eine Mittelspannung im Bereich zwischen 10 kV und 40 kV. Die genannten Werte beziehen sich auf die Nennspannung des eingangsseitigen Drehstromnetzes 1.

Die elektrische Anordnung weist weiterhin ein ausgangsseitiges Drehstromnetz 2 auf. Das eingangsseitige Drehstromnetz 2 weist mehrere ausgangsseitige Phasen 2a, 2b, 2c auf. Die Anzahl an ausgangsseitigen Phasen 2a, 2b, 2c liegt üblicherweise bei drei. In Verbindung mit drei ausgangsseitigen Phasen 2a, 2b, 2c wird die vorliegende Erfindung auch erläutert. Die Anzahl an ausgangsseitigen Phasen 2a, 2b, 2c könnte jedoch auch größer als drei sein. Das ausgangsseitige Drehstromnetz 2 führt in der Regel eine deutlich niedrigere Spannung als das eingangsseitige Drehstromnetz. Meist liegt die Spannung des ausgangsseitigen Drehstromnetzes 2 im Bereich zwischen 300 V und 2 kV, oftmals oberhalb von 500 V oder sogar 700 V. Die genannten Werte beziehen sich auf die Nennspannung des ausgangsseitigen Drehstromnetzes 2.

Die elektrische Anordnung weist weiterhin einen elektrischen Ofen 3 mit mehreren Elektroden 4a, 4b, 4c und einem Ofengefäß 5 auf. Der elektrische Ofen 3 kann ein Lichtbogenofen oder ein Pfannenofen sein.

Die Anzahl an Elektroden 4a, 4b, 4c stimmt mit der Anzahl an ausgangsseitigen Phasen 2a, 2b, 2c bzw. allgemein mit einem ganzzahligen Vielfachen der Anzahl an ausgangsseitigen Phasen 2a, 2b, 2c überein. Insbesondere sind die Elektroden 4a, 4b, 4c (bei der Ausgestaltung gemäß FIG 1 direkt) mit den ausgangsseitigen Phasen 2a, 2b, 2c verbunden. Aufgrund der Verbindung mit den - selbstverständlich Leistung führenden - ausgangsseitigen Phasen 2a, 2b, 2b werden zwischen den Elektroden 4a, 4b, 4c und einer in dem Ofengefäß 5 befindlichen Metallschmelze 6 Lichtbögen generiert, so dass über die Lichtbögen thermische Energie in die Metallschmelze 6 eingebracht wird. Gleiches gilt auch, wenn sich in dem Ofengefäß 5 festes Metall befindet, das durch die Lichtbögen zu der Metallschmelze 6 geschmolzen werden soll.

Somit ist bei der elektrischen Anordnung von FIG 1 zwischen dem eingangsseitigen Drehstromnetz 1 und den Elektroden 4a, 4b, 4c kein Ofentransformator angeordnet.

Die ausgangsseitigen Phasen 2a, 2b, 2c sind zur Versorgung mit elektrischer Energie mit den eingangsseitigen Phasen 1a, 1b, 1c über Umrichtereinheiten 7 verbunden. Die Bezugszeichen für die Umrichtereinheiten 7 sind in FIG 1 durch zwei Buchstaben ergänzt. Der erste Buchstabe steht für die jeweilige eingangsseitige Phase 1a, 1b, 1c, mit der die jeweilige Umrichtereinheit 7 verbunden ist, der zweite Buchstabe für die jeweilige ausgangsseitige Phase 2a, 2b, 2c. Die Umrichtereinheit 7ab ist beispielsweise mit der eingangsseitigen Phase 1a und der ausgangsseitigen Phase 2b verbunden. Für die anderen Umrichtereinheiten 7 gelten analoge Ausführungen. Nachstehend wird das Bezugszeichen 7 verwendet, wenn auf die Umrichtereinheiten 7 allgemein Bezug genommen wird. Wenn ganz spezifisch auf eine bestimmte der Umrichtereinheiten 7 Bezug genommen werden soll, wird das Bezugszeichen für die jeweilige Umrichtereinheit 7 durch die beiden Buchstaben ergänzt.

Entsprechend der Darstellung in FIG 1 sind die ausgangsseitigen Phasen 2a, 2b, 2c über die Umrichtereinheiten 7 jeweils mit mehreren der eingangsseitigen Phasen 1a, 1b, 1c verbunden. Konkret ist jede der ausgangsseitigen Phasen 2a, 2b, 2c über die Umrichtereinheiten 7 jeweils mit jeder der eingangsseitigen Phasen 1a, 1b, 1c verbunden. Aus diesem Grund sind konkret neun Umrichtereinheiten 7 vorhanden.

Gemäß FIG 1 sind die Umrichtereinheiten 7 nicht direkt mit den eingangsseitigen Phasen 1a, 1b, 1c verbunden. Vielmehr ist zwischen den Umrichtereinheiten 7 und den eingangsseitigen Phasen 1a, 1b, 1c jeweils eine eingangsseitige Induktivität 8 angeordnet. Ebenso sind gemäß FIG 1 die Umrichtereinheiten 7 auch nicht direkt mit den ausgangsseitigen Phasen 2a, 2b, 2c verbunden. Vielmehr ist zwischen den Umrichtereinheiten 7 und den ausgangsseitigen Phasen 2a, 2b, 2c jeweils eine ausgangsseitige Induktivität 9 angeordnet.

Gemäß der Darstellung in FIG 1 sind die eingangsseitigen Induktivitäten 8 individuell für die jeweilige Umrichtereinheit 7 vorhanden. Die ausgangsseitigen Induktivitäten 9 hingegen sind für die jeweilige ausgangsseitige Phase 2a, 2b, 2c zusammengefasst. Es sind jedoch auch beliebige Abwandlungen dieser Ausgestaltung möglich. So könnte insbesondere auch die inverse Ausgestaltung ergriffen werden (also eingangsseitige Induktivitäten 8 phasenweise zusammengefasst und ausgangsseitige Induktivitäten 9 individuell für die jeweilige Umrichtereinheit 7). Ebenso könnten auch auf beiden Seiten, also sowohl eingangsseitig als auch eingangsseitig, die Induktivitäten 8, 9 phasenweise zusammengefasst sein oder individuell für die jeweilige Umrichtereinheit 7 vorhanden sein.

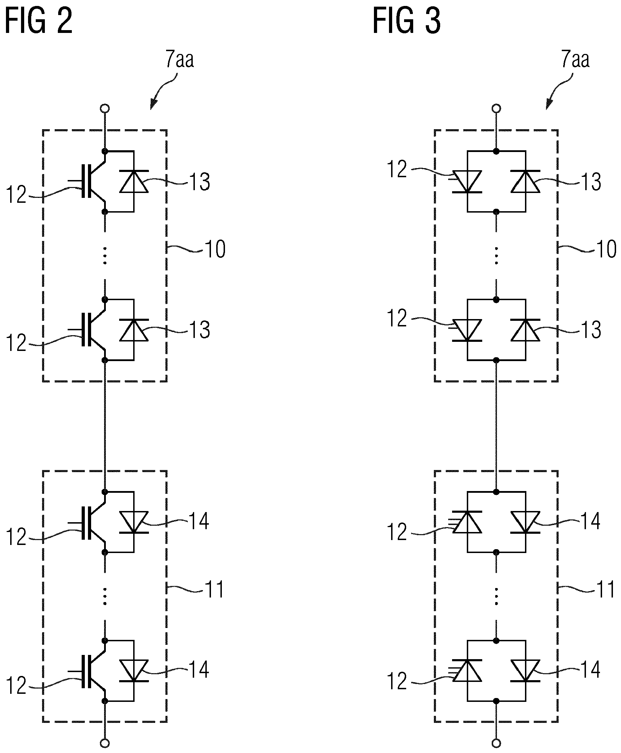

Die Umrichtereinheiten 7 sind in aller Regel einheitlich aufgebaut. Nachstehend werden daher in Verbindung mit den FIG 2 bis 5 mögliche Ausgestaltungen der Umrichtereinheit 7aa näher erläutert. Die Ausführungen zur Umrichtereinheit 7aa sind gleichermaßen auch die anderen Umrichtereinheiten 7 gültig.

Gemäß FIG 2 weist die Umrichtereinheit 7aa als Schaltelemente Gruppen 10, 11 auf. Die beiden Gruppen 10, 11 sind in Serie geschaltet. Die beiden Gruppen 10, 11 weisen ihrerseits jeweils eine Anzahl von in Serie geschalteten Halbleiterschaltern 12 auf. Die Anzahl von in Serie geschalteten Halbleiterschaltern 12 ist in der Regel größer als 1, so dass tatsächlich eine Serienschaltung vorliegt. Im Einzelfall kann pro Gruppe 10, 11 aber auch nur ein einzelner Halbleiterschalter 12 vorhanden sein.

Weiterhin sind den Gruppen 10, 11 als stromrichtende Elemente Gruppen von Dioden 13, 14 parallel geschaltet. Die Dioden 13 der einen Gruppe 10 sind invers zu den Dioden 14 der anderen Gruppe 11 gepolt. In der Regel besteht eine 1:1-Zuordnung einer Diode 13, 14 zu einem der Halbleiterschalter 12, beispielsweise weil die Dioden 13, 14 intrinsisch vorhandene Bestandteile der Halbleiterschalter 12 sind. Alternativ können die Dioden 13, 14 auch eigenständige Bauelemente sein.

Die Ausgestaltung der Umrichtereinheit 7aa von FIG 3 korrespondiert weitgehend mit der Ausgestaltung der Umrichtereinheit 7aa von FIG 2. Der Unterschied besteht darin, dass die Halbleiterschalter 12 bei der Ausgestaltung gemäß FIG 2 als Transistoren ausgebildet sind, während sie bei der Ausgestaltung gemäß FIG 3 als Thyristoren ausgebildet sind. Als Transistoren kommen insbesondere, wie in FIG 2 dargestellt, IGBTs in Frage, alternativ MOSFETs. Als Thyristoren kommen insbesondere GTOs in Frage (siehe FIG 3 unten), alternativ netzgeführte Thyristoren (siehe FIG 3 oben). Die verwendeten Thyristoren sind üblicherweise einheitlich gleichartig, also entweder alle GTOs oder alle netzgeführt. Die gemischte Darstellung von FIG 3 dient lediglich der Illustration.

Gemäß den FIG 2 und 3 sind die Halbleiterschalter 12 der jeweiligen Gruppe 10, 11 einschließlich der ihnen parallel geschalteten Dioden 13, 14 blockweise angeordnet. Es wäre jedoch auch eine alternierende Abfolge möglich.

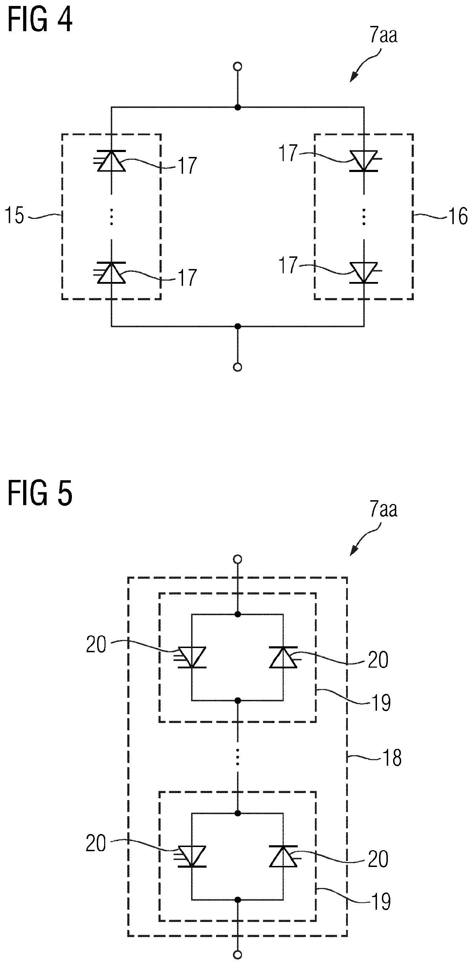

FIG 4 zeigt einen alternativen Aufbau der Umrichtereinheit 7aa. Gemäß FIG 4 weist die Umrichtereinheit 7aa als Schaltelemente zwei Gruppen 15, 16 von Thyristoren 17 auf. Die beiden Gruppen 15, 16 sind einander parallel geschaltet. Die Anzahl an Thyristoren 17 pro Gruppe 15, 16 kann nach Bedarf bestimmt sein. Oftmals ist sie größer als 1. In diesem Fall sind die Thyristoren 17 innerhalb der jeweiligen Gruppe 15, 16 entsprechend der Darstellung in FIG 4 in Serie geschaltet. Die Thyristoren 17 der einen Gruppe 15 sind jedoch invers zu den Thyristoren 17 der anderen Gruppe gepolt.

FIG 5 zeigt einen weiteren alternativen Aufbau der Umrichtereinheit 7aa. Gemäß FIG 5 weist die Umrichtereinheit 7aa als Schaltelemente eine Gruppe 18 von Thyristorblöcken 19 auf. Die Anzahl an Thyristorblöcken 19 kann nach Bedarf bestimmt sein. Oftmals ist sie größer als 1. In diesem Fall sind die Thyristorblöcke 19 entsprechend der Darstellung in FIG 5 in Serie geschaltet. Die Thyristorblöcke 19 weisen jeweils zwei Thyristoren 20 auf. Die beiden Thyristoren 20 des jeweiligen Thyristorblocks 19 sind einander parallel geschaltet, aber invers zueinander gepolt sind.

Ebenso wie bei der Ausgestaltung gemäß FIG 3 kommen bei den Ausgestaltungen der FIG 4 und 5 insbesondere GTOs in Frage (siehe FIG 4 und 5 jeweils links), alternativ netzgeführte Thyristoren (siehe FIG 4 und 5 jeweils rechts). Die verwendeten Thyristoren sind üblicherweise einheitlich gleichartig, also entweder alle GTOs oder alle netzgeführt. Die gemischte Darstellung der FIG 4 und 5 dient lediglich der Illustration.

Den konkreten Ausgestaltungen der Umrichtereinheit 7aa ist das wesentliche Element der vorliegenden Erfindung gemeinsam, dass die Umrichtereinheit 7aa weder intern noch (extern) parallel geschaltet elektrische Speicherelemente aufweist, also Kondensatoren. Vielmehr weist die Umrichtereinheit 7aa ausschließlich Schaltelemente 12, 17, 20 auf, denen lediglich noch gegebenenfalls (FIG 2, FIG 3) stromrichtende Elemente (Dioden 13, 14) parallel geschaltet sein können. Dadurch kann die Umrichtereinheit 7aa zwar die ausgangsseitige Phase 2a mit der eingangsseitigen Phase 1a stromleitend verbinden und ebenso auch die ausgangsseitige Phase 2a von der eingangsseitigen Phase 1a trennen. Hingegen kann die Umrichtereinheit 7aa weder intern noch durch externe parallel geschaltete elektrische Speicherelemente Energie speichern. Vielmehr sind innerhalb der Umrichtereinheit 7aa auftretende Spannungsverluste ausschließlich durch die an den Schaltelementen 12, 17, 20 auftretenden Spannungsabfälle hervorgerufen. Es erfolgt also durch die Umrichtereinheiten 7 in ihrer Gesamtheit eine Direktumrichtung.

Das eingangsseitige Drehstromnetz 1 ist nicht ausschließlich für die Versorgung der Elektroden 4a, 4b, 4c des elektrischen Ofens zuständig. Vielmehr weist die elektrische Anordnung gemäß FIG 1 weitere Lasten 21 auf, die an das eingangsseitige Drehstromnetz 1 angeschlossen sind. In FIG 1 ist zwar nur eine einzige weitere Last 21 dargestellt. Es können aber ohne weiteres auch mehrere derartige Lasten 21 vorhanden sein. Eine der Lasten 21 kann, soweit erforderlich, beispielsweise als Filter oder als Kondensator ausgebildet sein.

Weiterhin weist die elektrische Anordnung einen Abspanntransformator 22 auf, über den das eingangsseitige Drehstromnetz 1 mit elektrischer Energie versorgt wird. Eine Eingangsspannung des Abspanntransformators 22 liegt meist bei 110 kV.

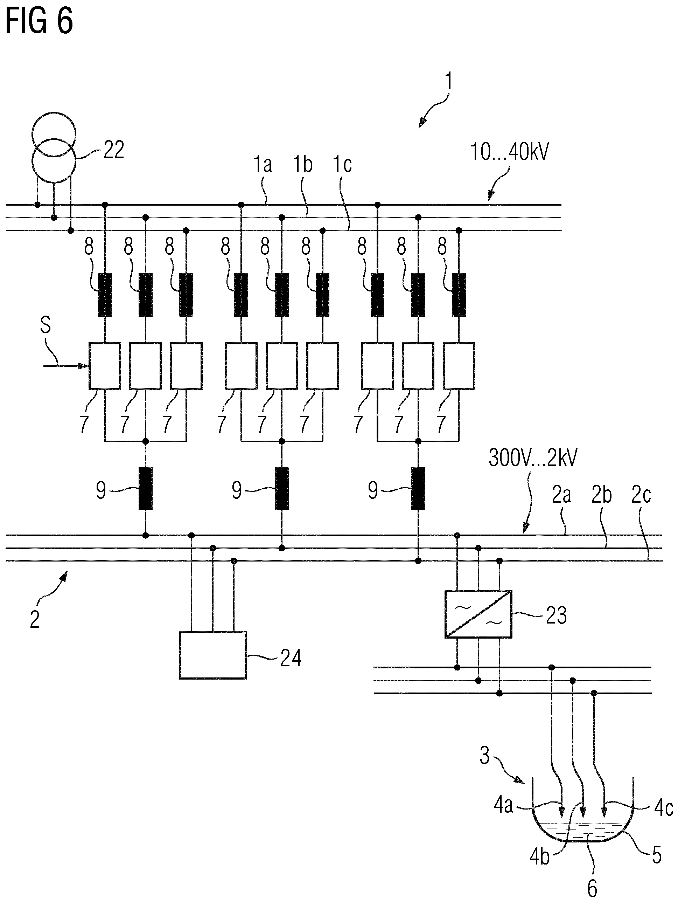

FIG 6 zeigt eine Abwandlung der elektrischen Anordnung von FIG 1. Der wesentliche Unterschied besteht darin, dass die Elektroden 4a, 4b, 4c mit den ausgangsseitigen Phasen 2a, 2b, 2c nicht direkt und 1:1, sondern über einen Umrichterblock 23 verbunden sind. Alle anderen Ausführungen zu FIG 1 sind auch für die Abwandlung gemäß FIG 6 gültig. Insbesondere ist auch bei der elektrischen Anordnung von FIG 6 zwischen dem eingangsseitigen Drehstromnetz 1 und den Elektroden 4a, 4b, 4c kein Ofentransformator angeordnet. Bei der Abwandlung gemäß FIG 6 kann die elektrische Anordnung jedoch - zusätzlich zu den Lasten 21 - weitere Lasten 24 aufweisen, die zusätzlich zu den Elektroden 4a, 4b, 4c an das ausgangsseitige Drehstromnetz 2 angeschlossen sind. In FIG 6 ist zwar nur eine einzige weitere Last 24 dargestellt. Es können aber ohne weiteres auch mehrere derartige Lasten 24 vorhanden sein

Bei der Ausgestaltung gemäß FIG 6 erfolgt die Versorgung der Elektroden 4a, 4b, 4c mit elektrischer Energie über den Umrichterblock 23. Der Umrichterblock 23 kann beispielsweise für jede Elektrode 4a, 4b, 4c eine weitere Umrichtereinheit aufweisen, die analog zu einer der in Verbindung mit den FIG 2 bis 5 erläuterten Umrichtereinheiten 7aa aufgebaut ist. In diesem Fall ergibt sich eine 1:1-Zuordnung zwischen den Elektroden 4a, 4b, 4c und den ausgangsseitigen Phasen 2a, 2b, 2c, so dass die Anzahl an weiteren Umrichtereinheiten gleich der Anzahl an Elektroden 4a, 4b, 4c bzw. der Anzahl an ausgangsseitigen Phasen 2a, 2b, 2c ist. Weiterhin kann der Umrichterblock 23 analog zur Gesamtheit der Umrichtereinheiten 7 ausgebildet sein. Diese beiden möglichen Ausgestaltungen des Umrichterblocks 23 sind nicht eigenständig dargestellt.

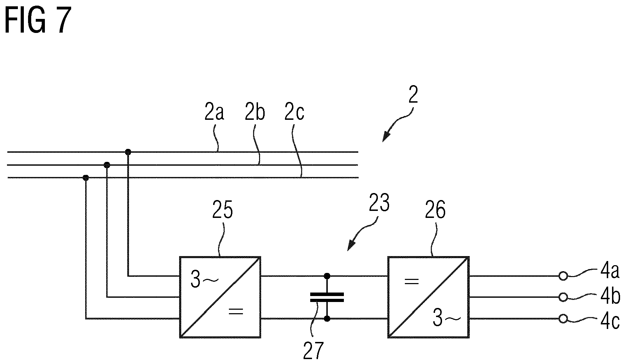

Alternativ kann der Umrichterblock 23 entsprechend der Darstellung in FIG 7 als Zwischenkreisumrichter ausgebildet sein. In diesem Fall weist der Umrichterblock 23 eingangsseitig einen Gleichrichter 25, ausgangsseitig einen Wechselrichter 26 und zwischen dem Gleichrichter 25 und dem Wechselrichter 26 einen Zwischenkreis mit einem Zwischenkreiskondensator 27 auf. Der Gleichrichter 25 kann alternativ ein ungesteuerter Diodengleichrichter oder ein mit elektronischen Schaltelementen aufgebauter Gleichrichter sein. Der Wechselrichter 26 weist stets elektronische Schaltelemente auf. Gegebenenfalls kann in den Zwischenkreis auch auf einem anderen Weg - also nicht aus dem ausgangsseitigen Drehstromnetz 2 elektrische Energie eingespeist werden, beispielsweise aus einem Energiespeicher wie eine Batterie oder dergleichen.

Mittels der Umrichtereinheiten 7 wird entsprechend der Darstellung FIG 1 eine elektrische Grö-ße U, I, P, f der von den Elektroden 4a, 4b, 4c ausgehenden Lichtbögen geregelt. Bei der elektrischen Größe U, I, P, f kann es sich um die den Elektroden 4a, 4b, 4c zugeführte Spannung U oder die den Elektroden 4a, 4b, 4c zugeführten Ströme I handeln. Auch kann es sich um eine aus der Spannung U und/oder dem Strom I abgeleitete Größe handeln, insbesondere eine Leistung P, beispielsweise die Wirkleistung, oder eine Betriebsfrequenz f. Die Regelung kann alternativ für die Elektroden 4a, 4b, 4c einheitlich oder individuell erfolgen.

Zur Erfassung der entsprechenden Spannungen U und der Ströme I können den Elektroden 4a, 4b, 4c Erfassungseinrichtungen 28, 29 zugeordnet sein. Die Erfassungseinrichtungen 28, 29 sind in FIG 1 nur bei einer der Elektroden 4a, 4b, 4c eingezeichnet. Sie sind aber in der Regel bei jeder Elektrode 4a, 4b, 4c vorhanden.

Die erfassten elektrischen Größen U, I werden einer Steuereinrichtung 30 zugeführt. Die Steuereinrichtung 30 ermittelt, soweit erforderlich, aus den erfassten Spannungen U und Strömen I die abgeleiteten Größen P, f. Der Steuereinrichtung 30 wird weiterhin (mindestens) eine Sollgröße U*, I*, P*, f* zugeführt, auf die geregelt werden soll. Die Steuereinrichtung 30 ermittelt in an sich bekannter Art und Weise anhand der Abweichung der erfassten bzw. abgeleiteten elektrischen Größen U, I, P, f von den entsprechenden Sollgrößen U*, I*, P*, f* Steuersignale S für die Umrichtereinheiten 7 und steuert die Umrichtereinheiten 7 entsprechend den ermittelten Steuersignalen S an. Aufgrund der entsprechenden Ansteuerung verbinden die Umrichtereinheiten 7 alternierend die jeweilige ausgangsseitige Phase 2a, 2b, 2c stromleitend mit der jeweiligen eingangsseitigen Phase 1a, 1b, 1c und trennen die jeweilige ausgangsseitige Phase 2a, 2b, 2c wieder von der jeweiligen eingangsseitigen Phase 1a, 1b, 1c.

Der Übersichtlichkeit halber ist die Ansteuerung der Umrichtereinheiten 7 in FIG 1 nur für die Umrichtereinheit 7aa dargestellt. Die Steuereinrichtung 30 ermittelt aber natürlich für alle Umrichtereinheiten 7 ihre jeweiligen Steuersignale S und steuert die Umrichtereinheiten 7 entsprechend den ermittelten Steuersignalen S an.

Die Ansteuerung der Umrichtereinheiten 7 wurde vorstehend für die Ausgestaltung der elektrischen Anordnung gemäß FIG 1 erläutert. Für die Ausgestaltung der elektrischen Anordnung gemäß FIG 6 gelten analoge Ausführungen.

Die vorliegende Erfindung weist viele Vorteile auf. Insbesondere ist sie einfach und kostengünstig zu realisieren und arbeitet robust und zuverlässig. Der Abspanntransformator 22 muss - im Gegensatz zu einem Ofentransformator - nicht kurzschlussfest sein. Die Frequenz, mit welcher die Elektroden 4a, 4b, 4c mit elektrischer Energie versorgt werden, kann variiert werden, wenn auch nur bis zur Betriebsfrequenz des eingangsseitigen Drehstromnetzes 1. Ein Ofentransformator und auch ein Ofenschalter sind nicht erforderlich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: eingangsseitiges Drehstromnetz
- 1a, 1b, 1c: eingangsseitige Phasen
- 2: ausgangsseitiges Drehstromnetz
- 2a, 2b, 2c: ausgangsseitige Phasen
- 3: elektrischer Ofen
- 4a, 4b, 4c: Elektroden
- 5: Ofengefäß
- 6: Metallschmelze
- 7: Umrichtereinheiten
- 8: eingangsseitige Induktivitäten
- 9: ausgangsseitige Induktivitäten
- 10, 11: Gruppen
- 12: Halbleiterschalter
- 13, 14: Dioden
- 15, 16: Gruppen
- 17, 20: Thyristoren
- 18: Gruppen
- 19: Thyristorblöcke
- 21, 24: Lasten
- 22: Abspanntransformator
- 23: Umrichterblock
- 25: Gleichrichter
- 26: Wechselrichter
- 27: Zwischenkreiskondensator
- 28, 29: Erfassungseinrichtungen
- 30: Steuereinrichtung

- U, I, P: elektrische Größen
- U*, I*, P*: Sollgrößen
- S: Steuersignale

## Patentansprüche

1. Elektrische Anordnung,
- wobei die elektrische Anordnung ein eingangsseitiges Drehstromnetz (1) mit mehreren eingangsseitigen Phasen (1a, 1b, 1c) aufweist,
- wobei die elektrische Anordnung ein ausgangsseitiges Drehstromnetz (2) mit mehreren ausgangsseitigen Phasen (2a, 2b, 2c) aufweist,
- wobei die elektrische Anordnung einen elektrischen Ofen (3) mit mehreren Elektroden (4a, 4b, 4c) und einem Ofengefäß (5) aufweist,
- wobei die Elektroden (4a, 4b, 4c) mit den ausgangsseitigen Phasen (2a, 2b, 2c) verbunden sind, so dass über von den Elektroden (4a, 4b, 4c) ausgehende Lichtbögen thermische Energie in in dem Ofengefäß (5) befindliches Metall bzw. in eine in dem Ofengefäß (5) befindliche Metallschmelze (6) eingebracht wird,
- wobei die ausgangsseitigen Phasen (2a, 2b, 2c) über jeweilige Umrichtereinheiten (7) jeweils mit mehreren der eingangsseitigen Phasen (1a, 1b, 1c) verbunden sind,
**dadurch gekennzeichnet,**
**dass** die Umrichtereinheiten (7) ausschließlich Schaltelemente (12, 17, 20) mit oder ohne den Schaltelementen (12, 17, 20) parallel geschaltete stromrichtende Elemente (13, 14), aber weder intern noch parallel geschaltet elektrische Speicherelemente aufweisen, so dass die Umrichtereinheiten (7) zwar die jeweilige ausgangsseitige Phase (2a, 2b, 2c) mit der jeweiligen eingangsseitigen Phase (1a, 1b, 1c) stromleitend verbinden und die jeweilige ausgangsseitige Phase (2a, 2b, 2c) von der jeweiligen eingangsseitigen Phase (1a, 1b, 1c) trennen können, aber weder intern noch durch parallel geschaltete elektrische Speicherelemente Energie speichern können und innerhalb der jeweiligen Umrichtereinheit (7) auftretende Spannungsverluste ausschließlich durch die an den Schaltelementen (12, 17, 20) auftretenden Spannungsabfälle hervorgerufen sind.

2. Elektrische Anordnung nach Anspruch 1,
**dadurch gekennzeichnet,**
**dass** die Umrichtereinheiten (7) als Schaltelemente (12, 17, 20) jeweils zwei in Serie geschaltete Gruppen (10, 11) von in Serie geschalteten Halbleiterschaltern (12) aufweisen, dass den Gruppen (10, 11) als strom richtende Elemente (13, 14) jeweils eine Gruppe von Dioden (13, 14) parallel geschaltet ist und dass die beiden Gruppen von Dioden (13, 14) invers zueinander gepolt sind.

3. Elektrische Anordnung nach Anspruch 2,
**dadurch gekennzeichnet,**
**dass** die Halbleiterschalter (12) als Transistoren oder als Thyristoren ausgebildet sind, insbesondere als MOSFETs, IGBTs, GTOs oder netzgeführte Thyristoren.

4. Elektrische Anordnung nach Anspruch 1,
**dadurch gekennzeichnet,**
**dass** die Umrichtereinheiten (7) als Schaltelemente (12, 17, 20) jeweils zwei einander parallel geschaltete Gruppen (15, 16) von in Serie geschalteten Thyristoren (17) aufweisen, die invers zueinander gepolt sind, oder dass die Umrichtereinheiten (7) als Schaltelemente (12, 17, 20) eine Gruppe (18) von in Serie geschalteten Thyristorblöcken (19) aufweisen, wobei die Thyristorblöcke (19) jeweils zwei einander parallel geschaltete Thyristoren (20) aufweisen, die invers zueinander gepolt sind.

5. Elektrische Anordnung nach einem der obigen Ansprüche,
**dadurch gekennzeichnet,**
**dass** zwischen den Umrichtereinheiten (7) und den eingangsseitigen Phasen (1a, 1b, 1c) jeweils eine eingangsseitige Induktivität (8) und/oder zwischen den Umrichtereinheiten (7) und den ausgangsseitigen Phasen (2a, 2b, 2c) jeweils eine ausgangsseitige Induktivität (9) angeordnet ist.

6. Elektrische Anordnung nach Anspruch 5,
**dadurch gekennzeichnet,**
**dass** die eingangsseitigen Induktivitäten (8) und/oder die ausgangsseitigen Induktivitäten (9) phasenweise zusammengefasst sind.

7. Elektrische Anordnung nach einem der obigen Ansprüche,
**dadurch gekennzeichnet,**
**dass** die Elektroden (4a, 4b, 4c) mit den ausgangsseitigen Phasen (2a, 2b, 2c) über einen Umrichterblock (23) verbunden sind.

8. Elektrische Anordnung nach Anspruch 7,
**dadurch gekennzeichnet,**
**dass** die elektrische Anordnung weitere Lasten (24) aufweist, die an das ausgangsseitige Drehstromnetz (2) angeschlossen sind.

9. Elektrische Anordnung nach einem der obigen Ansprüche,
**dadurch gekennzeichnet,**
**dass** zwischen dem eingangsseitigen Drehstromnetz (1) und den Elektroden (4a, 4b, 4c) des elektrischen Ofens (3) kein Ofentransformator angeordnet ist.

10. Elektrische Anordnung nach einem der obigen Ansprüche,
**dadurch gekennzeichnet,**
**dass** die elektrische Anordnung einen Abspanntransformator (22) aufweist, über den das eingangsseitige Drehstromnetz (1) mit elektrischer Energie versorgt wird.

11. Elektrische Anordnung nach einem der obigen Ansprüche,
**dadurch gekennzeichnet,**
**dass** die elektrische Anordnung weitere Lasten (21) aufweist, die an das eingangsseitige Drehstromnetz (1) angeschlossen sind.

12. Elektrische Anordnung nach einem der obigen Ansprüche,
**dadurch gekennzeichnet,**
**dass** das eingangsseitige Drehstromnetz (1) eine Mittelspannung im Bereich zwischen 10 kV und 40 kV führt.

13. Elektrische Anordnung nach einem der obigen Ansprüche,
**dadurch gekennzeichnet,**
**dass** das ausgangsseitige Drehstromnetz (2) eine Spannung im Bereich zwischen 300 V und 2 kV führt.

14. Elektrische Anordnung nach einem der obigen Ansprüche,
**dadurch gekennzeichnet,**
**dass** der elektrische Ofen (3) ein Lichtbogenofen oder ein Pfannenofen ist.

15. Betriebsverfahren für eine elektrische Anordnung nach einem der obigen Ansprüche,
**dadurch gekennzeichnet,**
**dass** zum Regeln einer elektrischen Größe (U, I, P) der von den Elektroden (4a, 4b, 4c) ausgehenden Lichtbögen die Umrichtereinheiten (7) derart angesteuert werden, dass sie alternierend die jeweilige ausgangsseitige Phase (2a, 2b, 2c) mit der jeweiligen eingangsseitigen Phase (1a, 1b, 1c) stromleitend verbinden und die jeweilige ausgangsseitige Phase (2a, 2b, 2c) von der jeweiligen eingangsseitigen Phase (1a, 1b, 1c) trennen.
